# EUROPEAN PATENT SPECIFICATION

(11) **EP 1 379 082 B1**
(45) Date of publication and mention of the grant of the patent: **08.06.2005**
(21) Application number: 02077696.9
(22) Date of filing: 04.07.2002
(51) Int. Cl.: H04N 5/64

(54) **Display apparatus**
Anzeigevorrichtung
Appareil d'affichage

(43) Date of publication of application: 07.01.2004
(73) Proprietor: Koninklijke Philips Electronics N.V., 5621 BA Eindhoven (NL)
(72) Inventor: Theodorus Franciscus Emilius Maria Overes, Prof. Holstlaan 6, 5656 AA Eindhoven (NL); Aeneas Fletterman, Prof. Holstlaan 6, 5656 AA Eindhoven (NL); Elmo Marcus Attila Diederiks, Prof. Holstlaan 6, 5656 AA Eindhoven (NL); Erwin Rinaldo Meinders, Prof. Holstlaan 6, 5656 AA Eindhoven (NL); Edwin Van Lier, Prof. Holstlaan 6, 5656 AA Eindhoven (NL); Ralph Hubert Peters, Prof. Holstlaan 6, 5656 AA Eindhoven (NL); Josephus Hubertus Eggen, Prof. Holstlaan 6, 5656 AA Eindhoven (NL); Rosendaal, Wilhelmus Joseph, 5656 AA Eindhoven (NL)
(74) Representative: Steenbeek, Leonardus Johannes

(56) References cited:
- DE-U- 20 002 420
- US-A- 5 408 387
- US-A1- 2002 038 157

## Description

The invention relates to a display apparatus such as a television set, or a monitor, and to a method of operating an entertainment center.

Recently, large screen displays have become known that can be put on a wall like a painting. Such displays may be (part of) a television set having a tuner, or (part of) a monitor without a tuner. DE 200 02 420 U1 discloses a television set and a lamp. The brightness of the lamp is controlled if the difference between the brightness of the lamp and the brightness of images rendered on the screen of the television exceeds a threshold value. This reduces eye fatigue when watching television. US20020038157 discloses a plurality of LEDs, which are controlled in response to an audio signal. US 6,166,496 discloses an illumination control signal, which is encoded in a television signal. The illumination control signal contains information on how to vary color and intensity of an illumination source. At the location of a television receiver and the illumination source, a decoder separates the control signal from the television signal. The decoded control signal controls the illumination source.

It is, inter alia, an object of the invention to provide an improved display apparatus. To this end, the invention provides a display apparatus as defined in the independent claims. Advantageous embodiments are defined in the dependent claims. These and other aspects of the invention will be apparent from and elucidated with reference to the embodiments described hereinafter. The attention of the reader is drawn to the fact that aspects of the invention described herein are covered by co-pending applications.

In the drawings,
Fig. 1 shows an embodiment of a display apparatus in accordance with the present invention;
Fig. 2 shows a block diagram of a first embodiment of a control circuit for use in a display apparatus in accordance with the present invention;
Fig. 3 shows a block diagram of a second embodiment of a control circuit for use in a display apparatus in accordance with the present invention; and
Fig. 4 shows a block diagram of a third embodiment of a control circuit for use in a display apparatus in accordance with the present invention.

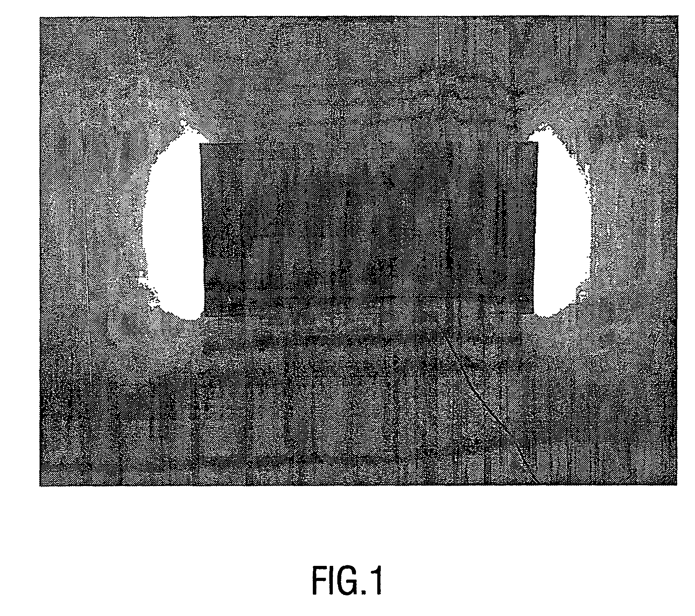

Fig. 1 shows an embodiment of a display apparatus in accordance with the present invention. The display apparatus is preferably mounted on a wall in a room. In accordance with the present invention, the display apparatus has illumination units for providing a background light at left-hand and right-hand sides of the display apparatus, preferably mounted at the back of the display apparatus. In an alternative embodiment, the illumination units are mounted at the left-hand and right-hand sides of the display apparatus. In yet other alternative embodiments, (some of) the illumination units are directed to the viewer. As a result of the invention, the display apparatus, preferably a display apparatus having a wide-screen display unit, has a much larger impact on those present in the room, even when no video signal is displayed. Alternatively or in addition thereto, the display apparatus may have an illumination unit on top and/or bottom sides of the display apparatus, again mounted at the back of the display apparatus.

It is noted that Philips produces a low-end TV (13PT30L) with lighted legs, which are just ornamental, and do nothing to improve the impact on the viewer. Moreover, it has been proven that watching TV in an illuminated surrounding is less tiring than watching TV in a dark room. This is because the surrounding light equalizes the difference between the different amount of screen light output. Clearly, the prior art lighted legs do not provide the advantage of the inventive illumination unit providing a background light having a controllable color. Moreover, Philips once produced a TV with an incandescent bulb inside, which equally does not provide the advantages of the present invention.

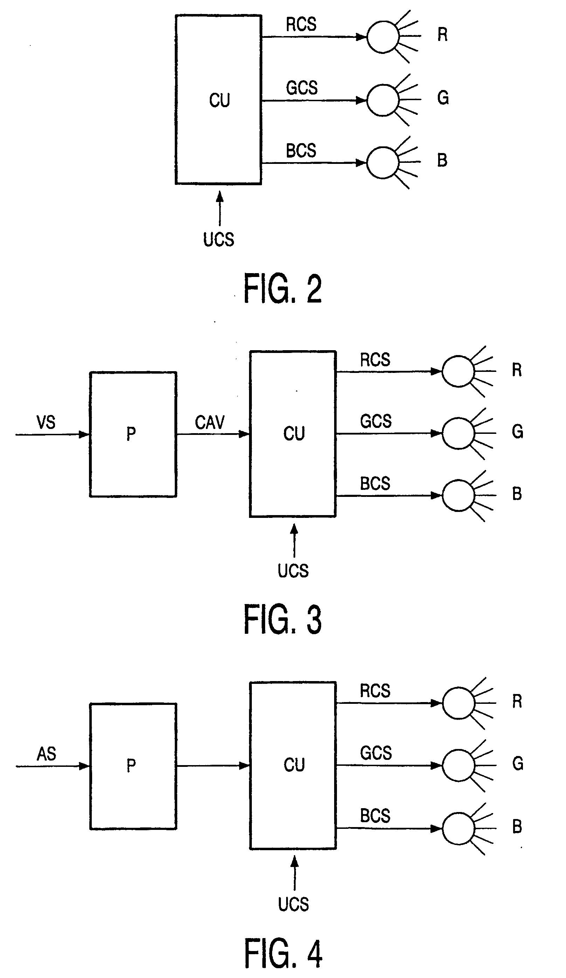

The illumination unit may create a neutral white background light. However, in accordance with an advantageous embodiment of the invention, the illumination unit may produce colored light, the color and brightness of which can be controlled so as to optimally fit in with the room and the wishes of the user. For example, the color could be tuned into a warmer color or a colder color. To this end, the embodiment shown in Fig. 2 has a control unit CU that produces red, green and blue control signals RCS, GCS, BCS that control red, green and blue LED illumination cells R, G, B mounted at the back side of the display apparatus, preferably in a sub-assembly in cooling units at the top and the bottom ends of light guides mounted along the left-hand and right-hand sides of the display apparatus. The control unit CU receives a user control signal UCS (that may be produced by a remote control signal reception device) to set the color in such a manner that it fits in with the room. While the illumination unit preferably employs LEDs, other light sources may be used in alternative embodiments. The control unit may receive a signal from a light sensor so as to make the light from the illumination unit dependent on ambient light as well.

In accordance with a further advantageous embodiment, the color of the light produced by the illumination unit depends on an average color of the video signal displayed on the display unit. To that end, the display apparatus includes a control circuit as shown in Fig. 3 for controlling the illumination unit in dependence of a video content of a video signal displayed on the display unit. This control circuit comprises a processor P, such as a suitably programmed microprocessor, that receives the input video signal VS and that produces an average color signal CAV in dependence thereon. The average color signal CAV is sent to the control unit CU that produces the red, green and blue control signals RCS, GCS, BCS that control the red, green and blue LED illumination cells R, G, B mounted at the back side of the display apparatus. By doing so, the LED illumination cells R, G, B are able to produce any color that matches the average color of the video signal VS. So, when an underwater scene is displayed, the illumination unit produces a blue-greenish light, while when a more reddish scene is shown, the illumination unit also produces a reddish color. As a result, the viewed scene will have a far greater impact on a viewer than the same scene when viewed on a prior art display apparatus. In a similar manner, the brightness of the light from the illumination units may depend on the brightness of the video signal.

In an advantageous embodiment, the color of the left-hand illumination unit depends on an average color at a left-hand part of a picture displayed on the display screen, while the color of the right-hand illumination unit depends on an average color of a right-hand part of the displayed picture.

In accordance with a still further embodiment, the control circuit controls the illumination unit in dependence of an audio signal. In this manner, the display apparatus can be used as a light organ that advantageously uses the controllable illumination unit present in the display apparatus in accordance with the present invention. The embodiment of Fig. 4 matches that of Fig. 3, with the difference that instead of the video signal VS, an audio signal AS is applied to the processor P. Preferably, the audio signal corresponds to the video signal. In this manner, when a video clip of a pop artist is displayed, the illumination unit functions as a light organ that depends on the audio signal of the pop song sung by the pop artist.

In summary, in an advantageous embodiment, the screen is provided with a lighting system that lights up against the background. This ambient lighting is built-in in the rear side of the screen and can be controlled by the remote control of the TV set. The ambient lighting causes a comfortable way of watching TV because it equals the light relation between the screen and the surroundings. By way of the ambient lighting, an effect is created like the TV is floating in front of the wall. It can also be used in case of not watching TV, than it functions like as decorative element in the room. The invention provides the following ergonomic advantages. In a dark room with a TV, the TV is the only source of light. When watching TV, one is fixated on that only source of light. The intensity of the light changing very fast when the image in the screen changes. The eye has to adapt to changing of the amount of light. The eye will become tired after a wile watching TV in a dark room. In a room with enough ambient light this problem does not appear because the difference in light production is not the only source of light that penetrates into the eye. Adding an ambient /background lighting will reduce the problem of watching TV with to little amount of light in the room.

It should be noted that the above-mentioned embodiments illustrate rather than limit the invention, and that those skilled in the art will be able to design many alternative embodiments without departing from the scope of the appended claims. For example, the various embodiments shown in the drawings may be combined, so that a user selects whether the color produced by the illumination unit is fixed at a set color, whether and how the color depends on the video signal VS, and/or whether and how the color depends on the audio signal AS. The color of the light from the illumination units may depend on a signal that is transmitted with the video signal, such as a teletext signal. For example, such an additional signal could indicate relatively darker colors for a heavy metal band, while relatively brighter colors are indicated for pop music intended for a younger audience. The invention is advantageously used in an entertainment center. The invention is not limited to TV screens hanging on the wall. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A display apparatus, comprising:
a display unit for displaying a picture;
at least one illumination unit (R, G, B) for providing a background light; and
means (CU) for controlling color of the background light in response to an average color of the picture at a side where the background light is present.

2. The display apparatus of claim 1, wherein the controlling means (CU) comprise a control circuit for controlling brightness and color of the background light.

3. The display apparatus of claim 2, further comprising a light sensor for sensing ambient light, the control circuit being adapted for controlling the brightness and color in response to the ambient light.

4. The display apparatus of claim 1, wherein the at least one illumination unit (R, G, B) comprises a left-hand illumination unit for providing illumination depending on an average color of a left-hand part of the picture, and a right-hand illumination unit for providing illumination depending on an average color of a right-hand part of the picture.

5. The display apparatus of claim 1, wherein the at least one illumination unit (R, G, B) is mounted on a top and/or a bottom side of the display apparatus.

6. The display apparatus of claim 1, wherein the at least one illumination unit (R, G, B) is mounted at a backside of the display apparatus.

7. The display apparatus of claim 1, being adapted for wall mounting.

8. The display apparatus of claim 1, wherein the illumination unit (R, G, B) comprises red, green and blue LEDs mounted at a light guide.

9. The display apparatus of claim 2, wherein the controlling of the color of the background light is user adjustable.

10. A method of operating an entertainment center, the method being **characterized by** using a display apparatus as claimed in claim 1.

## Patentansprüche

1. Wiedergabeanordnung, das die nachfolgenden Elemente umfasst:
- eine Wiedergabeeinheit zum Wiedergeben eines Bildes,
- wenigstens eine Beleuchtungseinheit (R, G, B) zum Liefern einer Hintergrundbeleuchtung; und
- Mittel (CU) zur Steuerung des Hintergrundlichtes in Reaktion auf eine mittlere Farbe des Bildes an der Seite, wo es das Hintergrundlicht gibt.

2. Wiedergabeanordnung nach Anspruch 1, wobei die Steuermittel (CU) eine Steuerschaltung aufweisen zur Steuerung der Helligkeit des Hintergrundlichtes.

3. Wiedergabeanordnung nach Anspruch 2, weiterhin mit einem Lichtsensor zum Abtasten des Umgebungslichtes, wobei die Steuerschaltung dazu vorgesehen ist, die Helligkeit und den Farbton in Reaktion des Umgebungslichtes zu steuern.

4. Wiedergabeanordnung nach Anspruch 1, wobei die wenigstens eine Beleuchtungseinheit (R, G, B) eine linke Beleuchtungseinheit zum Liefern von Beleuchtung abhängig von einem mittleren Farbton des linken Teils des Bildes aufweist und eine rechte Beleuchtungseinheit zum Liefern von Beleuchtung abhängig von einem mittleren Farbton eines rechten Teils des Bildes.

5. Wiedergabeanordnung nach Anspruch 1, wobei die wenigstens eine Beleuchtungseinheit (R, G, B) auf einer oberen und/oder einer unteren Seite der Wiedergabeanordnung vorgesehen ist.

6. Wiedergabeanordnung nach Anspruch 1, wobei die wenigstens eine Beleuchtungseinheit (R, G, B) auf einer Rückseite der Wiedergabeanordnung vorgesehen ist.

7. Wiedergabeanordnung nach Anspruch 1, vorgesehen zur Wandmontage.

8. Wiedergabeanordnung nach Anspruch 1, wobei die Beleuchtungseinheit (R, G, B) rote, grüne und blaue LEDs ausweist, die an einem Lichtleiter angeordnet sind.

9. Wiedergabeanordnung nach Anspruch 2, wobei die Steuerung des Farbtons des Hintergrundlichtes von Benutzer einstellbar ist.

10. Verfahren zum Betreiben eines Unterhaltungszentrums, wobei das Verfahren **dadurch gekennzeichnet ist, dass** eine Wiedergabeanordnung nach Anspruch 1 verwendet wird.

## Revendications

1. Dispositif d'affichage comprenant:
une unité d'affichage pour afficher une image;
au moins une unité d'illumination (R, G, B) pour fournir un éclairage de fond; et
des moyens (CU) pour commander la couleur de l'éclairage de fond en réaction à une couleur moyenne de l'image à un côté où l'éclairage de fond est présent.

2. Dispositif d'affichage selon la revendication 1, dans lequel les moyens de commande (CU) comprennent un circuit de commande pour commander la luminosité et la couleur de l'éclairage de fond.

3. Dispositif d'affichage selon la revendication 2, comprenant encore un détecteur de lumière pour détecter de la lumière ambiante, le circuit de commande étant adapté à commander la luminosité et la couleur en réaction à la lumière ambiante.

4. Dispositif d'affichage selon la revendication 1, dans lequel la au moins une unité d'illumination (R, G, B) comprend une unité d'illumination gauche pour fournir une illumination dépendant d'une couleur moyenne d'une partie gauche de l'image et une unité d'illumination droite pour fournir une illumination dépendant d'une couleur moyenne d'une partie droite de l'image.

5. Dispositif d'affichage selon la revendication 1, dans lequel la au moins une unité d'illumination (R, G, B) est montée sur un côté supérieur et/ou inférieur du dispositif d'affichage.

6. Dispositif d'affichage selon la revendication 1, dans lequel la au moins une unité d'illumination (R, G, B) est montée d'un côté arrière du dispositif d'affichage.

7. Dispositif d'affichage selon la revendication 1 qui est adapté à être monté à une paroi.

8. Dispositif d'affichage selon la revendication 1, dans lequel l'unité d'illumination (R, G, B) comprend des diodes électroluminescentes rouges, vertes et bleues qui sont montées à un guide de lumière.

9. Dispositif d'affichage selon la revendication 2, dans lequel la commande de la couleur de l'éclairage de fond est réglable par l'utilisateur.

10. Procédé d'opération d'un centre de divertissement, le procédé étant **caractérisé par** l'utilisation d'un dispositif d'affichage selon la revendication 1.
